# EUROPÄISCHE PATENTSCHRIFT

(11) **EP 1 571 277 B1**
(45) Veröffentlichungstag und Bekanntmachung des Hinweises auf die Patenterteilung: **16.05.2007**
(21) Anmeldenummer: 04004952.0
(22) Anmeldetag: 03.03.2004
(51) Int. Cl.: E04H 12/22, F16M 11/42

(54) **Mobiler Ständer**
movable stand
Pied mobile

(43) Veröffentlichungstag der Anmeldung: 07.09.2005
(73) Patentinhaber: Nerger, Jürgen, 47506 Neukirchen-Vluyn (DE); Teske, Heiko, 47506 Neukirchen-Vluyn (DE)
(72) Erfinder: Nerger, Jürgen, 47506 Neukirchen-Vluyn (DE)
(74) Vertreter: Cohausz & Florack

(56) Entgegenhaltungen:
- DE-A- 2 119 257
- DE-A- 19 904 473
- DE-B- 1 222 630
- US-A- 4 606 366

## Beschreibung

Die vorliegende Erfindung betrifft einen mobilen Ständer, insbesondere für einen Sonnenschirm, umfassend einen Standfuß, einen Rollenträger und eine Hebeeinrichtung, die den Standfuß derart mit dem Rollenträger verbindet, dass der Standfuß relativ zum Rollenträger bewegbar ist.

Für den eingangs beschriebenen Ständer gibt es eine Vielzahl unterschiedlicher Anwendungsmöglichkeiten. So kann ein solcher Ständer beispielsweise als Ständer für jegliche Art von Schirm, wie Sonnenschirm, Regenschirm, Marktschirm etc., dienen. Der Ständer kann auch als Wäscheständer bzw. Wäschespinnenständer, Produkt- oder Verkaufsständer, insbesondere Postkarten- und Bekleidungsständer, oder als Ständer für Hinweis-, Verkehrs- und Signalschilder, insbesondere für Baken von Straßenbegrenzungen und -absperrungen, dienen. Er kann auch als Sportgeräteständer, beispielsweise für einen Basketballkorb oder ein Volleyballnetz, verwendet werden. Auch Bauzäune, beispielsweise aus Metall, können in Verbindung mit diesem Ständer aufgestellt werden. Weiterhin ist es denkbar, den Ständer als Ständer für Party-Tische bzw. Stehtische etc. zu verwenden. Auch Blumenkübel oder Heizstrahler können auf dem Ständer abgestellt werden.

Aus der Schweizer Patentschrift CH 682975 A5 ist ein fahrbarer Sonnenschirmständer bekannt, der einen als Gehäuse dienenden Standfuß aufweist, der gegenüber dem Boden bzw. Untergrund anhebbar und absenkbar ist. Im Innern des Standfußes ist ein Rollenträger vorgesehen, der aus schwenkbaren Armen besteht, an deren jeweiligem Ende eine Rolle befestigt ist. Über eine Hebeeinrichtung können die Enden der Arme, an denen die Rollen befestigt sind, in vertikaler Richtung verschwenkt werden. Die Hebeeinrichtung erlaubt es dadurch, die Rollen in dem Standfuß, der den Rollenträger umgibt, zu versenken, so dass der Standfuß auf dem Untergrund aufsetzt, oder aus dem Standfuß herauszuklappen, so dass der Standfuß vom Untergrund abhebt.

Nachteilig an diesem Ständer ist neben dem komplizierten Aufbau der Hebeeinrichtung und des Rollenträgers, insbesondere der Schwenkarme, dass zwischen der Unterseite des durch den Standfuß gebildeten Ständergehäuses und dem Untergrund ein in seiner Größe veränderbarer Spalt gebildet ist. Dieser Spalt zwischen Gehäuseunterseite und Untergrund ist im angehobenen Zustand des Standfußes relativ groß und im abgesenkten Zustand nahezu nicht mehr vorhanden. Dies birgt einerseits ein erhebliches Verletzungsrisiko, da beim Absenkvorgang eine Klemmgefahr besteht. Insbesondere bei großen Sonnenschirmen, die in Cafes oder auf Märkten eingesetzt werden, kann es dazu kommen, dass der Benutzer beim Absenken des Standfußes mit Fingern oder dem Fuß in den Spalt gerät und schmerzhafte Verletzungen erlangt.

Ein weitere Nachteil ist, dass die unter dem Gehäuse befindliche Mechanik der Hebeeinrichtung und des Rollenträgers leicht verschmutzen kann, insbesondere wenn der Ständer mit angehobenem Standfuß, also mit unten offenem Gehäuse mit dem größtmöglichen Spalt zwischen Gehäuseunterseite und Untergrund, abgestellt wird. Insbesondere Regenwasser, aber auch Sand und Schmutz, können auf diese Weise leicht unter und in das Gehäuse gelangen und dadurch Beschädigungen, beispielsweise durch Korrosion, herbeiführen.

Deraus der DE 199 04 473 AI bekannte Ständer weist die Merkmale des Oberbegriffes des Anspruchs 1 auf. Aus der DE 199 04 473 AI ist eine mobile Stütze bekannt umfassend einen schmalen Fuß, der gegenüber dem Untergrund anhebbar und absenkbar ist, einen Rollenträger mit mehreren Rollen, der oberhalb des Fußes angeordnet ist, und eine Verstelleinrichtung, die den Fuß derart mit dem Rollenträger verbindet, dass der Fuß relativ zum Rollenträger bewegbar ist. Um einen stabilen Stand zu erreichen, muss die Vorrichtung zwingend durch ein Verlängern des oberen Teils der Stütze zwischen der Decke und dem Boden eines Raumes verklemmt werden.

Es ist daher die Aufgabe der vorliegenden Erfindung, einen Ständer bereitzustellen, mit dem auf komfortable Weise eine hohe Standfestigkeit und Stabilität erreicht wird.

Die zuvor hergeleitete und aufgezeigte Aufgabe wird erfindungsgemäß gelöst durch einen mobilen Ständer, insbesondere für einen Sonnenschirm, umfassend einen Standfuß, der gegenüber dem Untergrund anhebbar und absenkbar ist, einen Rollenträger mit mindestens drei Rollen, der oberhalb des Standfußes angeordnet ist, und eine Hebeeinrichtung, die den Standfuß derart mit dem Rollenträger verbindet, dass der Standfuß relativ zum Rollenträger bewegbar ist, wobei der Standfuß ein höheres Gewicht als der Rollenträger hat. Auf diese Weise wird erreicht, dass der äußere Teil des Ständers, der das Gehäuse bildet, gegenüber dem Boden bzw. Untergrund immer dieselbe Höhe hat und gleichzeitig der Teil mit dem meisten Gewicht, nämlich der Standfuß, von dem Rollenträger überdeckt und somit weniger leicht zugänglich ist, was die Verletzungsgefahr verringert.

Von besonderem Vorteil ist es in diesem Zusammenhang, wenn der Rollenträger entlang seines äußeren Umfangs einen nach unten gerichteten Kragen aufweist, derart, dass der Kragen den Standfuß seitlich umgibt. Auf diese Weise ist der Standfuß nach oben und zu den Seiten hin von einem Schutzgehäuse umgeben, welches beim Anheben und Absenken des Standfußes seine Lage relativ zum Boden nicht verändert. Der seitlich umlaufende, kragenförmige Teil des Rollenträgers verhindert, dass der Benutzer unbeabsichtigt mit der Hand oder mit dem Fuß unter den sich absenkenden, schweren Standfuß gerät. Dadurch wird die Gefahr von Verletzungen durch Einklemmen und Quetschen von Gliedmaßen deutlich reduziert. Ein Rollenträger, der, wie zuvor beschrieben, den Standfuß vollständig umgibt, unabhängig davon, ob der Standfuß angehoben oder abgesenkt ist, bildet auch einen idealen Schutz der im Innern befindlichen Bauteile vor Schmutz und Regenwasser, da auch im angehobenen Zustand des Standfußes kein vergrößerter Spalt zwischen Gehäuseunterkante und dem Boden entsteht. Selbstverständlich ist es alternativ oder zusätzlich auch denkbar, dass der Rollenträger mit einer Abdeckung, insbesondere aus Kunststoff, versehen ist, die entlang ihres äußeren Umfangs einen nach unten gerichteten Kragen hat, derart, dass der Kragen den Rollenträger und den Standfuß seitlich umgibt. Es muss also nicht unbedingt der Rollenträger das den Standfuß umgebende Gehäuse bilden, sondern dies kann auch durch eine Abdeckung erreicht werden, die Bestandteil des Rollenträgers ist. Auch eine solche Abdeckung verhindert, dass der Benutzer unabsichtlich unter den schweren Standfuß gerät oder dass Schmutz bzw. Wasser unter oder in das Innere des Ständers gelangt. Vorteilhafterweise ist diese Abdeckung lösbar vom übrigen Ständer, so dass sie leicht ausgetauscht werden kann.

Die Verletzungsgefahr, aber auch die Gefahr einer Verschmutzung oder eines Eindringens von Regenwasser in oder unter den Ständer, kann dadurch weiter verringert werden, dass der Kragen, also der kragenförmige Teil der Abdeckung und/oder der kragenförmige Teil des Rollenträgers, an seiner Unterseite einen umlaufenden, vorzugsweise elastischen Schmutzabweiser, insbesondere aus Gummi oder aus Borsten, aufweist. Mit einem solchen Schmutzabweiser wird der Kragen nach unten hin so weit verlängert, dass er den Untergrund bzw. Boden berührt, ohne diesen dabei zu zerkratzen oder zu beschädigen. Ein Quetschen von Gliedmaßen und ein Eindringen von Regen- oder Schmutzwasser ist auf diese Weise nahezu unmöglich.

Der Rollenträger, der den oberen Teil des Ständers bildet, ist vorteilhafterweise in sich steif ausgeführt, also ohne teure, reparaturanfällige Gelenke, wie im Stand der Technik verwendet. Auf diese Weise kann der Ständer auch schwere Gegenstände, beispielsweise Blumenkübel oder Gasflaschen auf stabile Weise tragen.

Der Rollenträger kann verschiedene Ausgestaltungen haben. Er kann beispielsweise eine Platte aufweisen und/oder ein Gestell, insbesondere aus Profilen, Rohren oder Stangen. Vorteilhafterweise bildet der Rollenträger eine ebene, zum Untergrund parallele Auflagefläche, was den Vorteil hat, dass darauf abgestellte Gegenstände sicher und stabil stehen.

Der Rollenträger kann zum eigenen Schutz oder zum Schutz der darauf abgestellten Gegenstände eine Abdeckung, insbesondere aus Kunststoff, aufweisen. Vorzugsweise ist diese Abdeckung, wie bereits zuvor dargestellt, entlang ihres äußeren Umfangs mit einem nach unten gerichteten Kragen versehen. Die Abdeckung kann aber auch nur partiell vorgesehen sein, beispielsweise auf dem oberen Teil des Rollenträgers, um diesen Teil in besonderem Maße vor darauf abgestellten Gegenständen zu schützen.

Auch der Standfuß, welcher unterhalb bzw. innerhalb des Rollenträgers angeordnet ist, kann auf verschiedene Weise ausgestaltet sein. So kann auch der Standfuß eine Platte oder ein Gestell, insbesondere aus Profilen, Rohren oder Stangen, aufweisen. Der Standfuß sollte aus einem schweren Material, beispielsweise aus Metall, insbesondere aus Stahl oder Blei, bestehen. Vorzugsweise ist das Gewicht des Standfußes größer als das Gewicht des Rollenträgers. Ein schwerer Standfuß erhöht deutlich die Stabilität des erfindungsgemäßen Ständers. Dies gilt um so mehr, als dass der Standfuß unterhalb des Rollenträgers angeordnet ist und damit zu einem besonders niedrigem Schwerpunkt beiträgt.

Wenn der Standfuß ein Gestell, insbesondere aus Profilen, Rohren oder Stangen aufweist, ist es besonders vorteilhaft, wenn das Gestell derart ausgebildet ist, dass Gewichtssegmente in dieses einsetzbar sind. Die Gewichtssegmente erlauben es einerseits, den Standfuß je nach gewünschtem Verwendungszweck mit einem individuellen Gewicht zu versehen und andererseits durch Entfernen aller Gewichtssegmente das Gewicht des Standfußes und damit des gesamten Ständers derart zu verringern, dass er auf einfache Weise verstaut, insbesondere weggehängt werden kann.

Zum eigenen Schutz und zum Schutz des Untergrunds kann der Standfuß an seiner Unterseite mit mehreren Füßen, insbesondere aus Kunststoff, versehen sein. Alternativ oder zusätzlich kann die Unterseite des Standfußes auch mit einer Beschichtung, insbesondere aus Kunststoff, versehen sein.

Gemäß einer bevorzugten Ausführungsform ist der Standfuß innerhalb des von den Rollen umgebenen Bereichs angeordnet. Es kann auch vorgesehen sein, dass der Standfuß seitlich über den von den Rollen umgebenen Bereich hinausgeht, wobei dann im Standfuß im Bereich der Rollen Aussparungen vorgesehen sein können. Der erfindungsgemäße Aufbau hat den Vorteil, dass der gesamte Bereich, ausgenommen der für die Rollen auszusparende Bereich, unterhalb des Rollenträgers für den Standfuß genutzt werden kann, was eine besonders geringe Bauhöhe des gesamten Ständers mit sich bringt. Aus diesem Grund ist die Hebeeinrichtung vorzugsweise oberhalb des Rollenträgers angeordnet. Der Platz unterhalb des Rollenträgers sollte ausschließlich für den Standfuß vorgesehen sein.

Die Hebeeinrichtung, mit der der Standfuß relativ zum Rollenträger bewegbar ist und dadurch gegenüber dem Boden bzw. Untergrund angehoben und abgesenkt werden kann, kann ebenfalls verschiedene Ausgestaltungen haben. Vorzugsweise weist die Hebeeinrichtung eines oder mehrere der folgenden Mittel auf: einen Hebel, eine Wippe, einen Seilzug oder Kettenzug, ein Zahnradgetriebe. All diese Mittel ermöglichen es, dass sich der Standfuß am relativ zum Boden unbeweglichen Rollenträger abstützen kann, um sich vom Boden abzuheben. Es ist auch denkbar, die Hebebewegung mittels eines Stellmotors, insbesondere eines Elektromotors, durchzuführen oder zumindest zu unterstützen. Besonders vorteilhaft ist es, wenn der Motor fernsteuerbar ist. Es kann auch ganz einfach nur ein Griff vorgesehen sein, der mit dem Standfuß verbunden ist und nach oben aus dem Rollenträger hinausragt. Über diesen Griff kann der Standfuß von Hand etwas angehoben und, beispielsweise durch eine leichte Drehung, in der angehobenen Stellung eingerastet werden.

Um den Ständer auf möglichst einfache Art und Weise bei angehobenem Standfuß rollen zu können, ist vorteilhafterweise eine Schubstange vorgesehen, die vorzugsweise lösbar mit dem Ständer verbunden ist. Die Schubstange kann im Bedarfsfall, also wenn der Ständer weggeschoben werden soll, mit diesem verbunden werden und anschließend, nachdem der Ständer am gewünschten Ort platziert ist, wieder entfernt werden. Es ist auch denkbar, die Schubstange als Bestandteil der Hebeeinrichtung auszubilden. Auf diese Weise kann mittels der Schubstange die Hebeeinrichtung bedient werden.

Die zuvor hergeleitete und aufgezeigte Aufgabe wird erfindungsgemäß auch durch einen Standfuß für einen Ständer, insbesondere für einen Ständer, wie er zuvor beschrieben ist, dadurch gelöst, dass er wie der zuvor beschriebene Standfuß ausgebildet ist. Vorzugsweise ist der Standfuß mit lösbaren Gewichtssegmenten versehen. Auf diese Weise erhält man einen Standfuß, der ganz individuell, abhängig vom Verwendungszweck, mit verschiedenen Gewichten bestückt werden kann. Die Gewichte können auch ganz entfernt werden, wodurch der Standfuß sehr leicht zu verstauen ist. Dieser Standfuß ist daher sehr komfortabel und birgt ein geringes Verletzungsrisiko.

Es gibt nun eine Vielzahl von Möglichkeiten zur Ausgestaltung des erfindungsgemäßen mobilen Ständers bzw. Standfußes. Hierzu wird beispielsweise verwiesen einerseits auf die dem Patentanspruch 1 und Patentanspruch 24 nachgeordneten Patentansprüche und andererseits auf die Beschreibung eines Ausführungsbeispiels in Verbindung mit der Zeichnung. In der Zeichnung zeigt
- Fig. 1a) und b): schematisch ein erstes Ausführungsbeispiel des erfindungsgemäßen Ständers,
- Fig. 2: ein zweites Ausführungsbeispiel des erfindungsgemäßen Ständers,
- Fig. 3a) und b): ein Ausführungsbeispiel einer Hebeeinrichtung für einen erfindungsgemäßen Ständer und
- Fig. 4: ein Ausführungsbeispiel eines erfindungsgemäßen Standfußes.

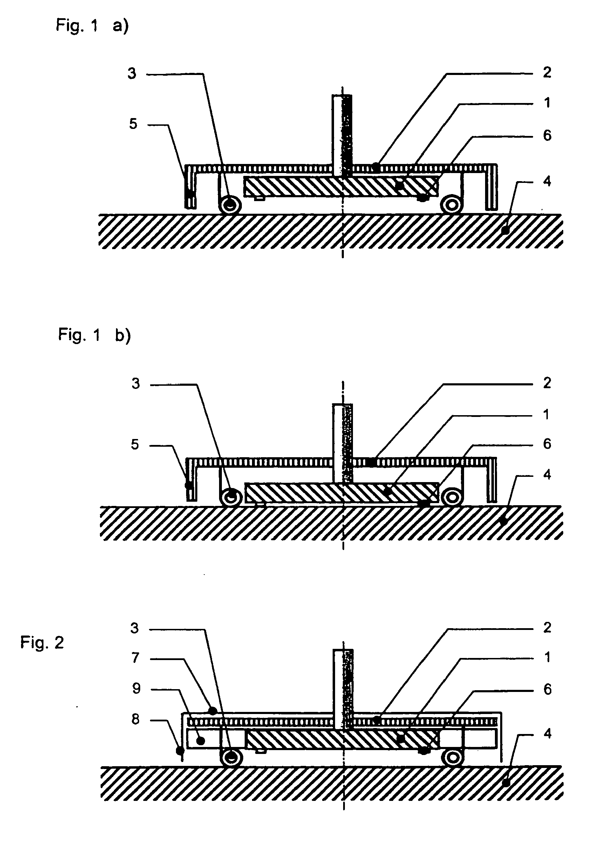

Fig. 1a) zeigt ein Ausführungsbeispiel eines erfindungsgemäßen mobilen Ständers, im vorliegenden Fall als Sonnenschirmständer ausgebildet, umfassend einen Standfuß 1, einen Rollenträger 2 mit mehreren Rollen 3 und einer nicht dargestellten Hebeeinrichtung, die den Standfuß 1 derart mit dem Rollenträger 2 verbindet, dass der Standfuß 1 relativ zum Rollenträger 2 bewegbar ist. Mit anderen Worten, der Standfuß 1 kann durch Abstützen am Rollenträger 2 mittels der Hebeeinrichtung gegenüber dem Boden 4 angehoben und abgesenkt werden. Den angehobenen Zustand zeigt Fig. 1a), den abgesenkten Zustand Fig. Ib).

Bei dem in den Figuren 1a) und b) dargestellten Ausführungsbeispiel ist der Rollenträger 2, der erfindungsgemäß oberhalb des Standfußes 1 angeordnet ist, entlang seines äußeren Umfangs mit einem nach unten gerichteten Kragen 5 versehen. Dieser kragenförmige Teil des Rollenträgers 2 hat den Vorteil, dass ein das Innere des Ständers, insbesondere den Standfuß 1, umgebendes Gehäuse gebildet wird, welches den Benutzer davor schützt, unbeabsichtigt mit der Hand oder dem Fuß unter den beweglichen, in der Regel sehr schweren Standfuß 1 zu kommen. Das liegt darin begründet, dass das Gehäuse, gebildet durch den Rollenträger 2 und den Kragen 5, immer dieselbe Höhe hat, unabhängig davon, ob der Standfuß 1 angehoben oder abgesenkt ist. Auf diese Weise ändert sich auch nicht die Breite des Spaltes zwischen dem Untergrund 4 und der Unterkante des Rollenträgers 2. Die erfindungsgemäße Konstruktion ist gleichzeitig ein wirksamer Schutz vor Schmutz und Regenwasser, welches auch bei angehobenen Standfuß 1 nicht ohne weiteres unter den Ständer gelangen kann.

Im dargestellten Ausführungsbeispiel hat der Standfuß 1 zum eigenen Schutz und zum Schutz des Untergrunds 4 vor Beschädigung unterseitig mehrere Kunststofffuße 6. Wie anhand von Fig. 1b) dargestellt ist, lagert der Standfuß 1 im abgesenkten Zustand gleichmäßig auf den Füßen 6.

Fig. 2 zeigt ein weiteres Ausführungsbeispiel eines erfindungsgemäßen Ständers, der sich von dem zuvor beschriebenen dadurch unterscheidet dass der Rollenträger 2 umfangsseitig nicht kragenförmig ausgebildet ist. Stattdessen weist der Rollenträger 2 eine Abdeckung 7 auf, die im vorliegenden Fall aus Kunststoff besteht, die entlang ihres äußeren Umfangs einen nach unten gerichteten Kragen 8 aufweist, der den Standfuß 1 seitlich umgibt. In diesem Fall übernimmt also die Kunststoffabdeckung, insbesondere ihr kragenförmiger Rand, die Schutzfunktion, welche beim in Fig. 1 dargestellten Ausführungsbeispiel vom kragenförmigen Rand des Rollenträgers 2 bewirkt wurde.

Das in Fig. 2 dargestellte Ausführungsbeispiel weist als weiteren Unterschied einen gegenüber Fig. 1 abgewandelten Standfuß 1 auf. Beim in Fig. 1 dargestellten Fall ist der Standfuß 1 ausschließlich innerhalb des von den Rollen 3 umgebenen Bereichs angeordnet. Bei Fig. 2 dagegen ist der Standfuß 1 etwas größer und ragt seitlich über den von den Rollen 3 umgebenen Bereich hinaus. Damit die Rollen 3 in allen Richtungen frei laufen können, sind im Standfuß 1 Aussparungen 9 vorgesehen.

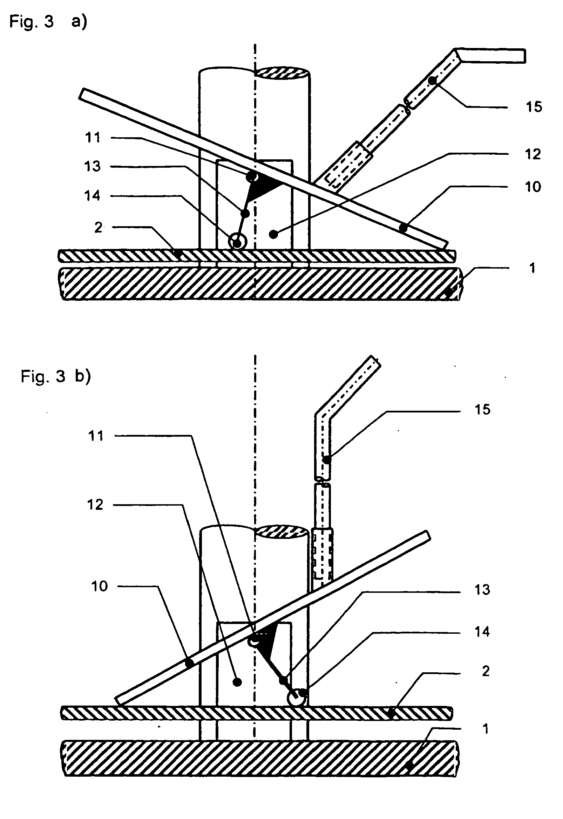

In den Figuren 3a) und b) ist die Funktionsweise einer möglichen Hebeeinrichtung dargestellt, mit deren Hilfe der Standfuß 1 relativ zum Rollenträger 2 bewegbar und dadurch gegenüber dem Untergrund anhebbar und absenkbar ist.

Im vorliegenden Fall besteht die Hebeeinrichtung aus einer Wippe 10, welche im Bereich ihres Drehpunkts 11 verschwenkbar mit einem Winkeleisen 12 verbunden ist, welches wiederum fest mit dem Standfuß 1 verbunden ist. An der Wippe 10 ist unterseitig ein Steg 13 angeschweißt, an dessen Ende eine Laufrolle 14 befestigt ist. Mit dieser Laufrolle 14 stützt sich der Standfuß 1 am Rollenträger 2 ab.

In Fig. 3a) ist die Wippe 10 auf ihrer rechten Seite in der unteren Stellung, was bewirkt, dass der Standfuß 1 angehoben ist. Insbesondere wird deutlich, dass sich der Standfuß 1 in dieser Stellung in Selbsthaltung befindet. So muss der Benutzer den Standfuß 1 im angehobenen Zustand beim Verschieben nicht selber halten. In Fig. 3b) ist die Wippe 10 auf ihrer linken Seite in der unteren Stellung, was bewirkt, dass der Standfuß 1 abgesenkt ist.

Die Wippe 10 kann beispielsweise mit der Hand oder dem Fuß bewegt werden. Um den Hebelarm zu vergrößern, ist vorliegend zusätzlich noch eine Schubstange 15 vorgesehen, die lösbar mit der Wippe 10 verbunden ist. Mit der Schubstange 15 kann gleichzeitig der Ständer, sofern der Standfuß 1 angehoben ist, mittels der Rollen 3 weggeschoben werden.

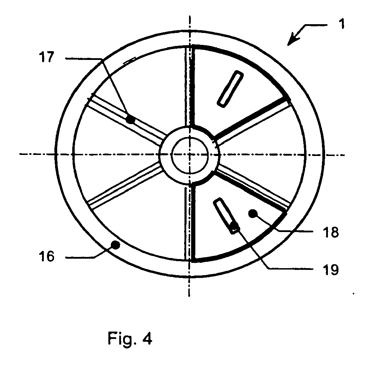

Fig. 4 zeigt schließlich ein Ausführungsbeispiel eines Standfußes 1, welcher aus einem Gestell besteht, das einen äußeren, kreisförmigen Rahmen 16 und sternförmig angeordnete T-Profile 17 aufweist. Die T-Profile 17 sind derart angeordnet, dass in dem Gestell des Standfußes 1 acht segmentierte Bereiche gleicher Größe gebildet werden, in welche wiederum Gewichtssegmente 18 eingesetzt werden können.

Im in Fig. 4 dargestellten Fall sind zwei Gewichtssegmente 18 in das Gestell eingesetzt. Die Gewichtssegmente 18 können dabei über einen Handgriff 19 auf einfache Weise eingesetzt und wieder entfernt werden, um das Gewicht des Standfußes 1 individuell den Bedürfnissen anpassen zu können.

Der dargestellte Standfuß 1 kann separat verwendet werden, um beispielsweise einen großen Marktschirm aufzunehmen. Es ist aber auch denkbar, dass der Standfuß 1 Bestandteil eines Ständers ist, wie er in den Figuren 1 bis 3 dargestellt wurde.

## Patentansprüche

1. Mobiler Ständer, insbesondere für einen Sonnenschirm, umfassend
- einen Standfuß (1), der gegenüber dem Untergrund (4) anhebbar und absenkbar ist,
- einen Rollenträger (2) mit mindestens drei Rollen (3), der oberhalb des Standfußes (1) angeordnet ist, und
- eine Hebeeinrichtung, die den Standfuß (1) derart mit dem Rollenträger (2) verbindet, dass der Standfuß (1) relativ zum Rollenträger (2) bewegbar ist,
**dadurch gekennzeichnet, dass**
wobei der Standfuß (1) ein höheres Gewicht als der Rollenträger (2) hat.

2. Ständer nach Anspruch 1, **dadurch gekennzeichnet, dass** der Rollenträger (2) in sich steif ausgeführt ist.

3. Ständer nach Anspruch 1 oder 2, **dadurch gekennzeichnet, dass** der Rollenträger (2) eine Platte aufweist.

4. Ständer nach einem der vorhergehenden Ansprüche, **dadurch gekennzeichnet, dass** der Rollenträger (2) ein Gestell, insbesondere aus Profilen, Rohren oder Stangen, aufweist.

5. Ständer nach einem der vorhergehenden Ansprüche, **dadurch gekennzeichnet, dass** der Rollenträger (2) eine ebene, zum Untergrund (4) parallele Auflagefläche bildet.

6. Ständer nach einem der vorhergehenden Ansprüche, **dadurch gekennzeichnet, dass** der Rollenträger (2) eine Abdeckung (7), insbesondere aus Kunststoff, aufweist.

7. Ständer nach Anspruch 6, **dadurch gekennzeichnet, dass** die Abdeckung (7) entlang ihres äußeren Umfangs einen nach unten gerichteten Kragen (8) aufweist, derart, dass der Kragen (8) den Standfuß (1) und den Rollenträger (2) seitlich umgibt.

8. Ständer nach einem der vorhergehenden Ansprüche, **dadurch gekennzeichnet, dass** der Rollenträger (2) entlang seines äußeren Umfangs einen nach unten gerichteten Kragen (5) aufweist, derart, dass der Kragen (5) den Standfuß (1) seitlich umgibt.

9. Ständer nach Anspruch 7 oder 8, **dadurch gekennzeichnet, dass** der Kragen (5, 8) an seiner Unterkante einen umlaufenden, vorzugsweise elastischen Schmutzabweiser, insbesondere aus Gummi oder aus Borsten, aufweist.

10. Ständer nach einem der vorhergehenden Ansprüche, **dadurch gekennzeichnet, dass** der Standfuß (1) eine Platte aufweist.

11. Ständer nach einem der vorhergehenden Ansprüche, **dadurch gekennzeichnet, dass** der Standfuß (1) ein Gestell, insbesondere aus Profilen, Rohren oder Stangen, aufweist.

12. Ständer nach Anspruch 11, **dadurch gekennzeichnet, dass** das Gestell derart ausgebildet ist, dass mehrere Gewichtssegmente (18) in das Gestell einsetzbar sind.

13. Ständer nach einem der vorhergehenden Ansprüche, **dadurch gekennzeichnet, dass** der Standfuß (1) an seiner Unterseite Füße (6), insbesondere aus Kunststoff, aufweist.

14. Ständer nach einem der vorhergehenden Ansprüche, **dadurch gekennzeichnet, dass** der Standfuß (1) zumindest an seiner Unterseite eine Beschichtung, insbesondere aus Kunststoff, aufweist.

15. Ständer nach einem der vorhergehenden Ansprüche, **dadurch gekennzeichnet, dass** der Standfuß (1) innerhalb des von den Rollen (3) umgebenen Bereichs angeordnet ist.

16. Ständer nach einem der Ansprüche 1 bis 14, **dadurch gekennzeichnet, dass** der Standfuß (1) seitlich über den von den Rollen (3) umgebenen Bereich hinausgeht, wobei im Standfuß (1) im Bereich der Rollen (3) Aussparungen (9) vorgesehen sein können.

17. Ständer nach einem der vorhergehenden Ansprüche, **dadurch gekennzeichnet, dass** der Standfuß (1) aus Metall, insbesondere aus Stahl oder Blei, besteht.

18. Ständer nach einem der vorhergehenden Ansprüche, **dadurch gekennzeichnet, dass** die Hebeeinrichtung oberhalb des Rollenträgers (2) angeordnet ist.

19. Ständer nach einem der vorhergehenden Ansprüche, **dadurch gekennzeichnet, dass** die Hebeeinrichtung, um den Standfuß (1) gegenüber dem Rollenträger (2) zu bewegen, eines oder mehrere der folgenden Mittel umfasst: einen Hebel, eine Wippe (10), einen Seil- oder Kettenzug, ein Zahnradgetriebe.

20. Ständer nach einem der vorhergehenden Ansprüche, **dadurch gekennzeichnet, dass** die Hebeeinrichtung einen Stellmotor, insbesondere einen Elektromotor, umfasst, der vorzugsweise fernsteuerbar ist.

21. Ständer nach einem der vorhergehenden Ansprüche, **dadurch gekennzeichnet, dass** eine Schubstange (15) mit dem Ständer, vorzugsweise lösbar, verbunden ist.

22. Ständer nach Anspruch 21, **dadurch gekennzeichnet, dass** die Schubstange (15) Bestandteil der Hebeeinrichtung ist.

## Claims

1. Mobile stand, in particular for a parasol, comprising
- a stand base (1), which can be lifted and lowered relative to the ground (4),
- a roller carrier (2) with at least three rollers (3), which is arranged above the stand base (1) and
- a lifting device, which connects the stand base (1) to the roller carrier (2) in such a manner that the stand base (1) can be moved relative to the roller carrier (2),
**characterized in that** the weight of the stand base (1) is greater than that of the roller carrier (2).

2. Stand according to claim 1, **characterized in that** the roller carrier (2) is intrinsically rigid.

3. Stand according to claim 1 or 2, **characterized in that** the roller carrier (2) comprises a plate.

4. Stand according to any one of the preceding claims, **characterized in that** the roller carrier (2) comprises a rack, in particular made of profiles, tubes or rods.

5. Stand according to any one of the preceding claims, **characterized in that** the roller carrier (2) forms a flat support surface parallel to the ground (4).

6. Stand according to any one of the preceding claims, **characterized in that** the roller carrier (2) comprises a cover (7), in particular made of plastic.

7. Stand according to claim 6, **characterized in that** the cover (7) comprises a flange (8) running downwards along its outer circumference, such that the flange (8) laterally surrounds the stand base (1) and the roller carrier (2).

8. Stand according to any one of the preceding claims, **characterized in that** the roller carrier (2) has a flange (5) running downwards along its outer circumference, such that the flange (5) laterally surrounds the stand base (1).

9. Stand according to claim 7 or 8, **characterized in that** the flange (5, 8) has a circulating, preferably flexible dirt deflector, in particular made of rubber or bristles, at its lower edge.

10. Stand according to any one of the preceding claims, **characterized in that** the stand base (1) has a plate.

11. Stand according to any one of the preceding claims, **characterized in that** the stand base (1) has a rack, in particular consisting of profiles, tubes or rods.

12. Stand according to claim 11, **characterized in that** the rack is formed in such a manner that several weight segments (18) may be inserted into it.

13. Stand according to any one of the preceding claims, **characterized in that** the stand base (1) has feet (6) on its underside, in particular made of plastic.

14. Stand according to any one of the preceding claims, **characterized in that** the stand base (1), at least on its underside, comprises a coating, in particular made of plastic,

15. Stand according to any one of the preceding claims, **characterized in that** the stand base (1) is arranged within the area enclosed by the rollers (3).

16. Stand according to any one of claims 1 to 14, **characterized in that** the stand base (1) extends laterally beyond the area enclosed by the rollers (3), clearances (9) being optionally provided in the stand base (1) in the region of the rollers (3).

17. Stand according to any one of the preceding claims, **characterized in that** the stand base (1) is made of metal, in particular steel or lead.

18. Stand according to any one of the preceding claims, **characterized in that** the lifting device is arranged above the roller carrier (2).

19. Stand according to any one of the preceding claims, **characterized in that**, in order to move the stand base (1) relative to the roller carrier (2) the lifting device comprises one or more of the following means: a lever, a rocker element (10), a cable or chain drive, a gear unit.

20. Stand according to any one of the preceding claims, **characterized in that** the lifting device comprises an actuator, in particular an electric motor, which is preferably remote-controlled.

21. Stand according to any one of the preceding claims, **characterized in that** a connecting rod (15) is connected to the stand, preferably detachably.

22. Stand according to claim 21, **characterized in that** the connecting rod (15) is a component of the lifting device.

## Revendications

1. Support mobile, en particulier pour un parasol, comprenant
- un pied (1) qui peut être soulevé et abaissé par rapport au sol,
- un support à roulettes (2) avec au moins trois roulettes (3), qui est agencé au-dessus du pied (1), et
- un mécanisme de levée, qui relie le pied (1) au support à roulettes (2) de sorte que ledit pied (1) peut être déplacé par rapport au support à roulettes (2)
**caractérisé en ce que**
le poids du pied (1) est plus élevé que le poids du support à roulettes (2).

2. Support selon la revendication 1, **caractérisé en ce que** le support à roulettes (2) est rigide par lui-même.

3. Support selon revendication 1 ou 2,
**caractérisé en ce que** le support à roulettes (2) présente une plaque.

4. Support selon l'une des revendications précédentes, **caractérisé en ce que** le support à roulettes (2) présente un cadre, en particulier en profilés, tubes ou barres.

5. Support selon l'une des revendications précédentes, **caractérisé en ce que** le support à roulettes (2) forme une surface d'appui plane, parallèle au sol (4).

6. Support selon l'une des revendications précédentes, **caractérisé en ce que** le support à roulettes (2) présente un recouvrement (7), en particulier en matière synthétique.

7. Support selon la revendication 6, **caractérisé en ce que**, le recouvrement (7) présente, le long de son pourtour extérieur, une jupe (8) orientée vers le bas de sorte que ladite jupe (8) entoure latéralement le pied (1) et le support à roulettes (2).

8. Support selon l'une des revendications précédentes, **caractérisé en ce que** le recouvrement présente, le long de son pourtour extérieur, une jupe (5) orientée vers le bas de sorte que ladite jupe (5) entoure latéralement le pied (1).

9. Support selon revendication 7 ou 8, **caractérisé en ce que** le col (5, 8) présente sur son bord inférieur un pare-boue continu, de préférence élastique, en particulier en caoutchouc ou en poils.

10. Support selon l'une des revendications précédentes, **caractérisé en ce que** le pied (1) présente une plaque.

11. Support selon l'une des revendications précédentes, **caractérisé en ce que** le pied (1) présente un cadre, en particulier en profilés, tubes ou barres.

12. Support selon la revendication 11, **caractérisé en ce que** le châssis est conçu de telle manière que plusieurs segments pondéreux (18) peuvent être insérés dans le cadre.

13. Support selon l'une des revendications précédentes, **caractérisé en ce que** le pied (1) présente, sur sa face inférieure, des pieds (6), particulièrement en matière synthétique.

14. Support selon l'une des revendications précédentes, **caractérisé en ce que** le pied (1) présente, au moins sur sa face inférieure, un revêtement, en particulier en matière synthétique.

15. Support selon l'une des revendications précédentes, **caractérisé en ce que** le pied (1) est agencé à l'intérieur de la zone entourée par les roulettes (3).

16. Support selon la revendique l'une des revendications 1 à 14, **caractérisé en ce que** le pied (1) s'étend, latéralement, au-delà de la zone entourée par les roulettes (3), des évidements (9) pouvant être prévus dans le pied, dans la région des roulettes (3).

17. Support selon l'une des revendications précédentes, **caractérisé en ce que** le pied (1) est en métal, en particulier en acier ou en plomb.

18. Support selon l'une des revendications précédentes, **caractérisé en ce que** le mécanisme de levée est agencé au-dessus du support à roulettes (2).

19. Support selon l'une des revendications précédentes, **caractérisé en ce que**, pour que le pied (1) puisse être déplacé par rapport au support à roulettes (2), le mécanisme de levée comprend un ou plusieurs des moyens suivants: un levier, un élément basculant, un système de traction à câbles ou à chaînes, un engrenage à roues dentées.

20. Support selon l'une des revendications précédentes, **caractérisé en ce que** le mécanisme de levée comprend un servomoteur, en particulier un moteur électrique, qui, de préférence, peut être télécommandé.

21. Support selon l'une des revendications précédentes, **caractérisé en ce que** la tige coulissante (15) est reliée au support, de préférence, de manière amovible.

22. Support selon la revendication 21, **caractérisé en ce que** la tige coulissante (15) est pièce constituante du mécanisme de levée.
